# EUROPEAN PATENT APPLICATION

(11) **EP 4 641 698 A1**
(43) Date of publication of application: **29.10.2025**
(21) Application number: 23906802.6
(22) Date of filing: 11.12.2023
(51) Int. Cl.: H01M 4/62, C08F 220/26, C08F 283/00, C08G 65/329, C08L 33/00, H01M 4/13, H01M 4/139

(54) **BINDER COMPOSITION FOR NONAQUEOUS SECONDARY BATTERIES AND NONAQUEOUS SECONDARY BATTERY ELECTRODE**

(30) Priority: 19.12.2022 JP 2022202379
(71) Applicant: Resonac Corporation, Tokyo 105-7325 (JP)
(72) Inventor: KAWAHARA, Yuta, Tokyo 105-7325 (JP); IKEHATA, Ryohsuke, Tokyo 105-7325 (JP); HORIKOSHI, Hideo, Tokyo 105-7325 (JP)
(74) Representative: Strehl & Partner mbB
(86) International application number: PCT/JP2023/044228
(87) International publication number: WO 2024/135437

(57) **Abstract**

The binder composition for a non-aqueous secondary battery includes a copolymer and a polyrotaxane, the copolymer having a first structural unit derived from a monomer (a1) and a second structural unit derived from a monomer (a2), the monomer (a1) is a nonionic compound having only one ethylenically unsaturated bond, the monomer (a2) is a compound having a carboxy group and having only one ethylenically unsaturated bond, and the polyrotaxane has a cyclic molecule having a cyclic skeleton and a chain molecule that penetrates an opening of the cyclic molecule and has stopper groups at both ends.

## Description

### TECHNICAL FIELD

The present invention relates to a binder composition for a non-aqueous secondary battery, a slurry for a non-aqueous secondary battery electrode, a non-aqueous secondary battery electrode, and a non-aqueous secondary battery.
This application claims priority based on Japanese Patent Application No. 2022-202379, filed on December 19, 2022, the contents of which are incorporated herein by reference.

### BACKGROUND ART

Non-aqueous secondary batteries can be made small and lightweight, and are therefore widely used as power sources for notebook computers, mobile phones, power tools, electronic and communication devices, etc. In recent years, non-aqueous secondary batteries have also been used as power sources for electric vehicles and hybrid vehicles, etc. A representative example of a non-aqueous secondary battery is the lithium-ion secondary battery.

A non-aqueous secondary battery includes a positive electrode using a metal oxide or the like as an active material, a negative electrode using a carbon material such as graphite as an active material, and an electrolyte. The positive electrode and the negative electrode each include a current collector and an electrode active material layer formed on the current collector. The electrode active material layer usually includes a binder that bonds the active materials together and between the active materials and the current collector, thereby fixing the electrode active material layer on the current collector. Conventionally, binders used in non-aqueous secondary batteries are known from Patent Documents 1 and 2.

Patent Document 1 describes a binder composition for secondary battery electrodes, which contains 100 parts by mass of an aqueous dispersion of at least one polymer selected from the group consisting of a styrene-butadiene copolymer latex and an acrylic emulsion, and 1 to 20 parts by mass of a nonionic surfactant.

Patent Document 2 describes a binder for lithium ion secondary battery electrodes having a glass transition temperature of 30° C. or lower, which is obtained by emulsion polymerization of ethylenically unsaturated monomers containing, as essential components, 15 to 70% by mass of styrene relative to the total amount of ethylenically unsaturated monomers, an ethylenically unsaturated carboxylic acid ester, an ethylenically unsaturated carboxylic acid, and an internal crosslinking agent, in the presence of a surfactant.

Patent Document 3 describes a resin emulsion for paint that can be suitably used for architectural exterior paints, etc. Patent Document 3 discloses a resin emulsion for paint in which a resin constituting the resin emulsion for paint has a glass transition temperature of 0° C. or higher and contains 0.01 to 4 mass % of a structural unit derived from a modified polyrotaxane, and the modified polyrotaxane has a structure in which a functional group having a radical polymerizable group is bonded to a cyclic molecule of the polyrotaxane having a cyclic molecule and a chain molecule that penetrates the opening of the cyclic molecule and has stopper groups at both ends.

### CITATION LIST

### PATENT DOCUMENT

Patent Document 1: Japanese Patent Application Publication No. 2014-239070 (A)
Patent Document 2: Japanese Patent Application Publication No. 2011-243464 (A)
Patent Document 3: Japanese Patent Application Publication No. 2019-116594 (A)

### SUMMARY OF THE INVENTION

### TECHNICAL PROBLEM

In recent years, there has been a strong demand for higher output, higher capacity, and longer life for non-aqueous secondary batteries. Binders used in non-aqueous secondary batteries are required to be able to improve the cycle characteristics of non-aqueous secondary batteries having electrodes using the binders.

The present invention has been made in consideration of the above circumstances, and has an object to provide a binder composition for non-aqueous secondary batteries capable of forming an electrode which results in a non-aqueous secondary battery with excellent cycle characteristics, a method for producing the same, a slurry for non-aqueous secondary battery electrodes, a non-aqueous secondary battery electrode which results in a non-aqueous secondary battery with excellent cycle characteristics, and a non-aqueous secondary battery including the same .

### SOLUTION TO PROBLEM

The present invention includes the following aspects.
[1] A binder composition for a non-aqueous secondary battery including a copolymer and a polyrotaxane, wherein
   the copolymer includes:
      a first structural unit derived from a monomer (a1); and
      a second structural unit derived from monomer (a2),
   the monomer (a1) is a nonionic compound having only one ethylenically unsaturated bond,
   the monomer (a2) is a compound having a carboxy group and only one ethylenically unsaturated bond,
   the polyrotaxane has a cyclic molecule having a cyclic skeleton, and a chain molecule passing through an opening of the cyclic molecule and having stopper groups at both ends.
[2] The binder composition for a non-aqueous secondary battery according to [1], wherein at least one of the cyclic skeletons in the cyclic molecules is a crown ether skeleton, a cyclic siloxane skeleton, or a cyclic oligosaccharide skeleton.
[3] The binder composition for a non-aqueous secondary battery according to [1] or [2], wherein at least one of the cyclic skeletons in the cyclic molecule is an α-cyclodextrin skeleton.
[4] The binder composition for a non-aqueous secondary battery according to any one of [1] to [3], wherein at least one of the stopper groups is a dinitrophenyl group, an adamantyl group, a trityl group, or a derivative group of any of these groups.
[5] The binder composition for a non-aqueous secondary battery according to any one of [1] to [4], wherein at least one of the stopper groups is an adamantyl group.
[6] The binder composition for a non-aqueous secondary battery according to any one of [1] to [5], wherein the chain molecule is at least one selected from the group consisting of polyethylene glycol, polypropylene glycol, polyisoprene, polyisobutylene, polybutadiene, polytetrahydrofuran, polyacrylic acid ester, polydimethylsiloxane, polyethylene, and polypropylene.
[7] The binder composition for a non-aqueous secondary battery according to any one of [1] to [6], wherein at least one of the chain molecules is polyethylene glycol.
[8] The binder composition for a non-aqueous secondary battery according to any one of [1] to [7], wherein the chain molecule has a weight average molecular weight of 5,000 to 50,000.
[9] The binder composition for a non-aqueous secondary battery according to any one of [1] to [8], wherein the polyrotaxane has an ethylenically unsaturated bond.
[10] A binder composition for non-aqueous secondary batteries according to [9], wherein a group containing an ethylenically unsaturated bond is bonded to said cyclic skeleton, and at least one of the groups containing an ethylenically unsaturated bond bonded to said cyclic skeleton is a (meth)acryloyl group, vinyl group, allyl group, or propenyl group.
[11] The binder composition for a non-aqueous secondary battery according to [10], wherein at least one of the groups containing an ethylenically unsaturated bond bonded to the cyclic skeleton is a (meth)acryloyl group.
[12] The binder composition for a non-aqueous secondary battery according to any one of [1] to [8], wherein the polyrotaxane has no ethylenically unsaturated bond.
[13] The binder composition for a non-aqueous secondary battery according to any one of [1] to [12], wherein a content of the polyrotaxane relative to 100 parts by mass of the copolymer is 0.10 parts by mass or more and 50 parts by mass or less.
[14] The binder composition for a non-aqueous secondary battery according to any one of [1] to [13], wherein a content of the second structural unit in all structural units of the copolymer is 0.10% by mass or more and 20% by mass or less.
[15] The binder composition for a non-aqueous secondary battery according to any one of [1] to [14], wherein the copolymer comprises a third structural unit derived from a monomer (a3), and
   the monomer (a3) is a compound having a plurality of independent ethylenically unsaturated bonds.
[16] The binder composition for a non-aqueous secondary battery according to [15], wherein a content of the third structural unit in all structural units of the copolymer is 0.010% by mass or more and 10% by mass or less.
[17] The binder composition for a non-aqueous secondary battery according to any one of [1] to [16], further including an aqueous medium.
[18] The binder composition for a non-aqueous secondary battery according to [17], wherein emulsified particles containing the copolymer and the polyrotaxane are dispersed in the aqueous medium.
[19] A slurry for a non-aqueous secondary battery electrode, including the binder composition for a non-aqueous secondary battery according to [17] and an electrode active material.
[20] A non-aqueous secondary battery electrode including the non-volatile component of the binder composition for non-aqueous secondary batteries according to any one of [1] to [18].
[21] A non-aqueous secondary battery including the non-aqueous secondary battery electrode according to [20].

### ADVANTAGEOUS EFFECT OF INVENTION

According to the present invention, it is possible to provide a binder composition for a non-aqueous secondary battery, which can form an electrode from which a non-aqueous secondary battery having excellent cycle characteristics can be obtained, and a method for producing the same.

Furthermore, according to the present invention, there can be provided a slurry for a non-aqueous secondary battery electrode, which can form an electrode from which a non-aqueous secondary battery having excellent cycle characteristics can be obtained. Furthermore, according to the present invention, it is possible to provide a non-aqueous secondary battery electrode from which a non-aqueous secondary battery having excellent cycle characteristics can be obtained, and a non-aqueous secondary battery having excellent cycle characteristics including the same.

### BRIEF DESCRIPTION OF THE DRAWINGS

Figure 1 is a schematic cross-sectional view showing an example of a non-aqueous secondary battery electrode produced using the binder composition for a non-aqueous secondary battery of the present invention.
Figure 2 is a schematic diagram for explaining a polyrotaxane used as a raw material of the binder composition for a non-aqueous secondary battery of the present invention.

### DESCRIPTION OF EMBODIMENTS

The present inventors have conducted extensive research as described below in order to solve the above problems and realize a binder capable of forming a non-aqueous secondary battery electrode that can provide a non-aqueous secondary battery with excellent cycle characteristics.

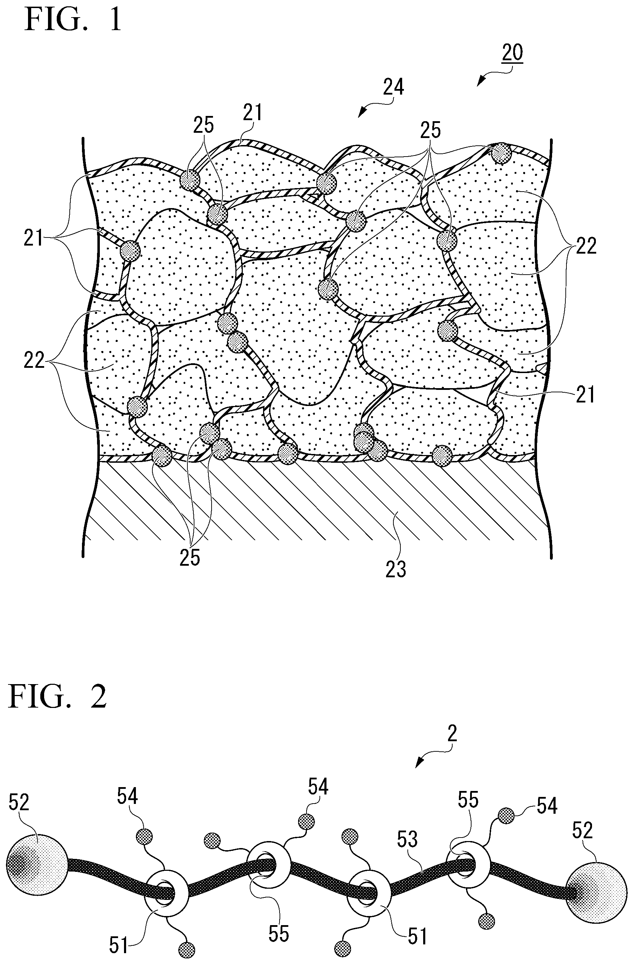

Figure 1 is a schematic cross-sectional view showing an example of a non-aqueous secondary battery electrode produced using the binder composition for non-aqueous secondary batteries of the present invention.

The non-aqueous secondary battery electrode (hereinafter, sometimes referred to as "electrode") 20 shown in Figure 1 includes a current collector 23 made of copper foil or the like, and an electrode active material layer 24 formed on the current collector 23. In one embodiment, the electrode active material layer 24 includes an electrode active material 22, a thickener 21, and a binder 25. The binder 25 is composed of the non-volatile component of the binder composition for non-aqueous secondary batteries of the present invention.

The discharge capacity of a non-aqueous secondary battery including the electrode 20 decreases when the electrode active material layer 24 of the electrode 20 expands and contracts due to the expansion and contraction of the electrode active material 22 accompanying use of the non-aqueous secondary battery, i.e., charging and discharging, and peels off from the current collector 23. Even if the electrode active material layer 24 does not peel off from the current collector 23, the discharge capacity of the non-aqueous secondary battery decreases when the adhesion between the electrode active materials 22 and between the electrode active material 22 and the current collector 23 becomes insufficient due to the expansion and contraction of the electrode active material 22.

For this reason, it is preferable that the binder 25 is capable of maintaining the binding between the electrode active materials 22 and between the electrode active material 22 and the current collector 23 for a long period of time, and capable of forming an electrode 20 in which the electrode active material layer 24 is not easily peeled off from the current collector 23.

However, in the conventional technology, the toughness of the binder is insufficient, and the binder cannot follow the expansion and contraction of the electrode active material 22 that accompanies charging and discharging.

The multiple electrode active materials 22 contained in the electrode active material layer 24 expand and contract in random directions. For this reason, most of the binder 25 contained in the electrode active material layer 24 is disposed between the electrode active materials 22 that expand and contract in different directions, and between the electrode active materials 22 and the current collector 23 that expand and contract in different directions. Therefore, unless the binder 25 has sufficient conformity to each of the multiple materials that expand and contract in different directions and are in contact with each other via the binder 25, good binding properties cannot be obtained.

For example, when a coating film containing a binder but not containing the electrode active material 22 is formed on a substrate, the binder in the coating film only needs to follow the direction of expansion and contraction of the substrate. For this reason, even if a binder can be used as a material for a coating film that is difficult to peel off from the substrate, it does not necessarily have a followability sufficient to obtain sufficient binding between the electrode active materials 22 and between the electrode active material 22 and the current collector 23, and it does not necessarily mean that the electrode active material layer 24 containing this binder and the electrode active material 22 is difficult to peel off from the current collector 23.

For this reason, with conventional technology, it has been difficult to realize a binder that has good binding properties between the electrode active materials 22 and between the electrode active material 22 and the current collector 23, and that prevents the electrode active material layer 24 from peeling off from the current collector 23.

Therefore, the present inventors have focused on copolymer (P) obtained by copolymerizing monomer (a1) made of a nonionic compound having only one ethylenically unsaturated bond with monomer (a2) made of a compound having a carboxy group and only one ethylenically unsaturated bond, as a polymer that can easily give an electrode active material layer 24 that is not easily peeled off from a current collector 23 made of copper foil or the like, and have conducted extensive research on a binder composition for a non-aqueous secondary battery containing this copolymer (P).

As a result, it has been found that it is sufficient to use a binder composition for a non-aqueous secondary battery, which contains a copolymer (P) obtained by copolymerizing a raw material monomer (a) containing the above-mentioned monomer (a1) and monomer (a2), and a polyrotaxane.

Figure 2 is a schematic diagram for explaining the polyrotaxane used as a raw material of the binder composition for a non-aqueous secondary battery of the present invention.

The polyrotaxane 2 shown in Fig. 2 includes a cyclic molecule 51 having a cyclic skeleton, and a chain molecule 53 which passes through an opening 55 of the cyclic molecule 51 and has stopper groups 52 at both ends. In Fig. 2, reference numeral 54 denotes a modifying group. The polyrotaxane 2 may not have the modifying group 54.

In the binder 25 contained in the electrode 20 manufactured using the binder composition for a non-aqueous secondary battery containing the copolymer (P) obtained by copolymerizing the raw material monomer (a) containing the monomer (a1) and the monomer (a2) and the polyrotaxane 2 shown in Figure 2, the cyclic molecules 51 contained in the polyrotaxane 2 can move relative to the chain molecules 53. For this reason, when stress is applied to the binder 25, the cyclic molecules 51 of the polyrotaxane 2 contained in the binder 25 move relative to the chain molecules 53 (pulley effect), and the stress is dispersed. In addition, when the cyclic molecules 51 in the binder 25 move due to the stress applied to the binder 25 and the distance between the cyclic molecules 51 on the chain molecules 53 becomes closer, the binder 25 exerts an air spring effect that tries to maintain the distance between the cyclic molecules 51 on the chain molecules 53, and is restored.

For these reasons, the binder 25 has the ability to follow the expansion and contraction of the electrode active material 22 that accompanies the use of a non-aqueous secondary battery, due to the polyrotaxane 2. As a result, it is presumed that the electrode active material layer 24 containing the binder 25 has the following functions <1> and <2>.
<1> Due to the conformability attributable to the polyrotaxane 2, the holding force of the electrode active material 22 by the binder 25 present between the electrode active materials 22 in the electrode active material layer 24 and between the electrode active material 22 and the current collector 23 is increased, and even if the electrode active material 22 expands and contracts, the binding between the electrode active materials 22 and between the electrode active material 22 and the current collector 23 is maintained for a long period of time.
<2> Even if the electrode active material layer 24 expands and contracts in accordance with the expansion and contraction of the electrode active material 22, the conformability due to the polyrotaxane 2 effectively exhibits the adhesion to the current collector 23 resulting from the structural units derived from the monomer (a1) and the monomer (a2) in the copolymer (P), making the electrode active material layer 24 less likely to peel off from the current collector 23.

Furthermore, the present inventors produced an electrode 20 using a binder composition for a non-aqueous secondary battery containing the above-mentioned copolymer (P) and polyrotaxane 2, and confirmed that the cycle characteristics of a non-aqueous secondary battery having this electrode 20 were excellent, and thus conceived of the present invention.

The binder composition for aqueous secondary batteries, the slurry for non-aqueous secondary battery electrodes, the non-aqueous secondary battery electrodes, the non-aqueous secondary batteries, and the method for producing the binder composition for non-aqueous secondary batteries of the present invention will be described in detail below. Note that the present invention is not limited to the following embodiments.

Here, the following terms used in this specification will be explained.

"(Meth)acrylic" is a general term for acrylic and methacrylic. "(Meth)acrylate" is a general term for acrylate and methacrylate.

The term "ethylenically unsaturated bond" refers to an ethylenically unsaturated bond having radical polymerizability, unless otherwise specified.

In a polymer using a compound having an ethylenically unsaturated bond, a structural unit derived from the compound having an ethylenically unsaturated bond means a structural unit in which the chemical structure of the portion other than the ethylenically unsaturated bond in the compound having an ethylenically unsaturated bond is the same as the chemical structure of the portion in the polymer other than the portion corresponding to the ethylenically unsaturated bond of the structural unit. The ethylenically unsaturated bond of the compound is changed to a single bond when forming a polymer. For example, in a polymer of methyl methacrylate, the structural unit derived from methyl methacrylate is represented by -CH ₂ -C(CH₃)(COOCH₃)-.

In the case of a polymer of a compound having an ionic functional group and an ethylenically unsaturated bond, for example, a structural unit having an ionic functional group such as a carboxyl group, such as the second structural unit described later, is considered to be a structural unit derived from the same ionic compound, regardless of whether a part of the functional group has been ion-exchanged or not. For example, a structural unit represented by -CH₂-C(CH₃)(COONa)- may also be considered to be a structural unit derived from methacrylic acid.

**In** addition, for a compound having multiple independent ethylenically unsaturated bonds, one or more ethylenically unsaturated bonds may remain in the structural unit of the polymer of the compound. For example, in the case of a polymer of divinylbenzene, the structural unit derived from divinylbenzene may be a structure without an ethylenically unsaturated bond (the parts corresponding to the two ethylenically unsaturated bonds of divinylbenzene are both incorporated into the polymer chain), or may be a structure with one ethylenically unsaturated bond (the part corresponding to only one of the ethylenically unsaturated bonds is incorporated into the polymer chain).Here, the multiple independent ethylenically unsaturated bonds refer to multiple ethylenically unsaturated bonds that do not form conjugated dienes with each other.

Furthermore, after polymerization, when a portion other than the chain structure corresponding to the ethylenically unsaturated bond in the polymer, for example, a functional group such as a carboxyl group, no longer corresponds to the chemical structure of the monomer due to a chemical reaction, the structural unit of the polymer is made to be a structural unit derived from a compound having an ethylenically unsaturated bond in the polymer. For example, when vinyl acetate is polymerized and then saponified, the structural unit of the polymer is made to be a structural unit derived from vinyl alcohol, not a structural unit derived from vinyl acetate, based on the chemical structure of the polymer.

In this embodiment, the term "class" attached to the name of a compound means a group of compounds that include the compound structure, and includes the compound having a substituent.

### <1. Binder composition for non-aqueous secondary battery>

The binder composition for a non-aqueous secondary battery of this embodiment (hereinafter sometimes referred to as "binder composition") contains a copolymer (P) having a first structural unit and a second structural unit described below, and a polyrotaxane 2 shown in Figure 2. The binder composition of this embodiment may contain an aqueous medium, and it is preferable that the copolymer (P) and the polyrotaxane 2 are each dispersed in an aqueous medium described below. The binder composition of this embodiment may not contain an aqueous medium, and may be composed of a non-volatile component containing the copolymer (P) having the first structural unit and the second structural unit, and the polyrotaxane 2.

The binder composition of the present embodiment may contain other components in addition to the copolymer (P) having the first structural unit and the second structural unit, and the polyrotaxane 2. Specifically, the binder composition of the present embodiment may contain, as other components, for example, a polymer not having the first structural unit and/or the second structural unit, a surfactant, components used in the synthesis of the copolymer (P), and the like.

### (Copolymer (P))

The copolymer (P) contained in the binder composition of the present embodiment has at least a first structural unit derived from the monomer (a1) shown below and a second structural unit derived from the monomer (a2) shown below. The copolymer (P) contained in the binder composition of the present embodiment may contain, in addition to the first structural unit and the second structural unit, a third structural unit derived from a monomer (a3) composed of a compound having a plurality of independent ethylenically unsaturated bonds, which does not fall under the monomer (a1) or the monomer (a2), and/or a fourth structural unit derived from another monomer (a4) which does not fall under any of the monomers (a1) to (a3).

### [First structural unit]

The first structural unit in the copolymer (P) contained in the binder composition of the present embodiment is derived from the monomer (a1).

Monomer (a1) is a nonionic compound having only one ethylenically unsaturated bond. That is, monomer (a1) is a compound having neither an anionic functional group nor a cationic functional group. However, silane compounds are not included in monomer (a1). Monomer (a1) may be only one type of compound, or may be a combination of two or more types of compounds.

As the monomer (a1), it is preferable to use at least one of a (meth)acrylic acid ester and an aromatic compound having an ethylenically unsaturated bond, and it is more preferable to use a combination of both compounds. The (meth)acrylic acid ester is more preferably a (meth)acrylic acid alkyl ester. The number of carbon atoms in the alkyl (meth)acrylic acid ester is preferably 1 to 20. In this case, a monomer (a1) other than the (meth)acrylic acid alkyl ester and the aromatic compound having an ethylenically unsaturated bond described later may be used in combination.

Examples of the (meth)acrylic acid alkyl ester contained in the (meth)acrylic acid ester used in the monomer (a1) include methyl (meth)acrylate, ethyl (meth)acrylate, n-propyl (meth)acrylate, isopropyl (meth)acrylate, n-butyl (meth)acrylate, tert-butyl (meth)acrylate, cyclohexyl (meth)acrylate, 2-ethylhexyl (meth)acrylate, isobornyl (meth)acrylate, lauryl (meth)acrylate, stearyl (meth)acrylate, etc. Among these, it is preferable to contain 2-ethylhexyl acrylate, since this results in a binder composition capable of forming an electrode active material layer 24 having excellent electrolyte resistance.

Examples of aromatic compounds having an ethylenically unsaturated bond used in the monomer (a1) include styrene, t-butylstyrene, α-methylstyrene, p-methylstyrene, 1,1-diphenylethylene, etc. When the monomer (a1) contains an aromatic vinyl compound, it is more preferable that the monomer (a1) contains at least one of styrene and α-methylstyrene, and it is even more preferable that the monomer (a1) contains styrene, since this has excellent dispersibility in an aqueous medium and a non-aqueous secondary battery including an electrode 20 produced using the binder composition of this embodiment has better cycle characteristics.

Examples of the monomer (a1) other than the (meth)acrylic acid ester and the aromatic compound having an ethylenically unsaturated bond include a compound having an ethylenically unsaturated bond and a nonionic polar functional group, an aliphatic hydrocarbon compound having an ethylenically unsaturated bond, and an alicyclic hydrocarbon compound having an ethylenically unsaturated bond.

The polar functional group in the compound having an ethylenically unsaturated bond and a polar functional group used for the monomer (a1) preferably contains at least one of a hydroxy group and a cyano group, and more preferably contains a hydroxy group.

Examples of the compound having an ethylenically unsaturated bond and a polar functional group used in the monomer (a1) include 2-hydroxyethyl (meth)acrylate, 2-hydroxypropyl (meth)acrylate, and (meth)acrylonitrile. It is preferable to contain 2-hydroxyethyl methacrylate, since good polymerization stability can be obtained when producing the copolymer (P).

[Second structural unit] The second structural unit in the copolymer (P) contained in the binder composition of the present embodiment is derived from the monomer (a2). The monomer (a2) is a compound having only one ethylenically unsaturated bond and a carboxy group. The monomer (a2) may be a single type of compound or a combination of two or more types of compounds.

As the monomer (a2), a compound having a plurality of carboxy groups in one molecule may be used, that is, the copolymer (P) may contain a plurality of carboxy groups in one structural unit.

Examples of the monomer (a2) having a carboxy group include unsaturated monocarboxylic acids such as methacrylic acid, acrylic acid, and crotonic acid, and unsaturated dicarboxylic acids such as itaconic acid and fumaric acid. Among these, the monomer (a2) is preferably at least one of acrylic acid, methacrylic acid, and itaconic acid, since it serves as a binder composition capable of forming an electrode 20 having good binding properties between the electrode active materials 22 and between the electrode active material 22 and the current collector 23.

At least a part of the structural unit derived from the monomer (a2) may form a salt with a basic substance. Examples of the monomer (a2) forming a salt include metal salts and ammonium salts of the monomer (a2). Examples of the metal salt include alkali metals such as lithium, sodium, and potassium. Specific examples of the compound include lithium (meth)acrylate, lithium itaconate, dilithium itaconate, sodium (meth)acrylate, sodium itaconate, disodium itaconate, ammonium (meth)acrylate, ammonium itaconate, and diammonium itaconate.

### [Third structural unit]

The copolymer (P) contained in the binder composition of this embodiment may have a third structural unit as an optional structural unit. The third structural unit is derived from the monomer (a3). The monomer (a3) is a compound having a plurality of independent ethylenically unsaturated bonds. "Independent" means that it is not a conjugated double bond such as that of 1,3-butadiene. Therefore, the monomer (a3) is a compound capable of forming a cross-linked structure in radical polymerization with the monomer (a1) and the monomer (a2). The monomer (a3) does not fall under either the monomer (a1) or the monomer (a2). As the monomer (a3), only one type of compound may be used, or two or more different types of compounds may be used.

Examples of the monomer (a3) include compounds having two ethylenically unsaturated bonds, such as divinylbenzene, ethylene glycol di(meth)acrylate, 1,6-hexanediol di(meth)acrylate, and 2-hydroxy-3-acryloyloxypropyl methacrylate, and compounds having three or more ethylenically unsaturated bonds, such as trimethylolpropane tri(meth)acrylate. It is preferable to use at least one of divinylbenzene and trimethylolpropane triacrylate as the monomer (a3), because good polymerization stability can be obtained when producing the copolymer (P), and a non-aqueous secondary battery having an electrode 20 produced using a binder composition containing the copolymer (P) has a lower internal resistance and excellent cycle characteristics.

### [Other monomers (a4)]

The other monomer (a4) is a monomer that does not fall under any of the monomers (a1) to (a3). Examples of the other monomer (a4) include, but are not limited to, a compound having only one ethylenically unsaturated bond and having an anionic functional group other than a carboxyl group, such as a sulfo group or a phosphate group, a surfactant having an ethylenically unsaturated bond (hereinafter, sometimes referred to as a "polymerizable surfactant"), a compound having an ethylenically unsaturated bond and functioning as a silane coupling agent, and the like.

The compound having only one ethylenically unsaturated bond and having a sulfo group includes aromatic vinyl compounds having a sulfo group, aromatic vinyl compounds having a sulfo group forming a salt, etc. Among these, it is preferable to use at least one of p-styrenesulfonic acid and p-styrenesulfonic acid salt, and it is more preferable to use p-styrenesulfonic acid salt. It is more preferable to use sodium p-styrenesulfonate because it can obtain good polymerization stability when producing copolymer (P).

As the polymerizable surfactant, which is an example of the other monomer (a4), a compound having an ethylenically unsaturated bond and functioning as a surfactant can be used.

Examples of the polymerizable surfactant include compounds represented by the following chemical formulas (1) to (4).

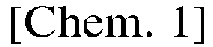

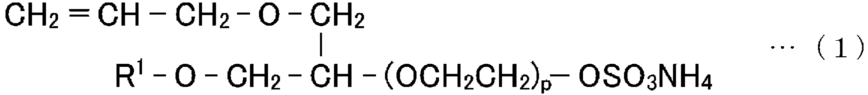

In formula (1), R¹ is an alkyl group. p is an integer of 10 to 40. R¹ is preferably an alkyl group having 10 to 40 carbon atoms, and more preferably a linear unsubstituted alkyl group having 10 to 40 carbon atoms.

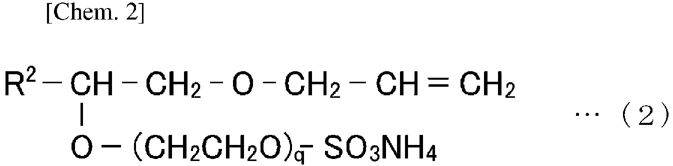

In formula (2), R₂ is an alkyl group. q is an integer of 10 to 12. R² is preferably an alkyl group having 10 to 40 carbon atoms, and more preferably a straight-chain unsubstituted alkyl group having 10 to 40 carbon atoms. Examples of the compound represented by formula (2) include polyoxyethylene alkyl ether sulfate (Aqualon KH-10, manufactured by Dai-ichi Kogyo Seiyaku Co., Ltd.).

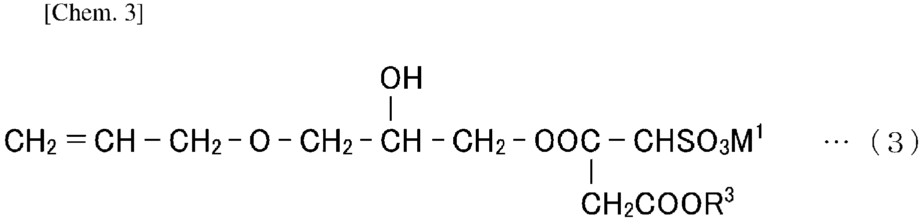

In formula (3), R³ is an alkyl group. M¹ is NH₄ or Na. R³ is preferably an alkyl group having 10 to 40 carbon atoms, and more preferably a linear unsubstituted alkyl group having 10 to 40 carbon atoms.

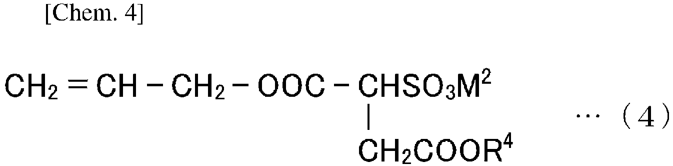

In formula (4), R⁴ is an alkyl group. M² is NH₄ or Na. R⁴ is preferably an alkyl group having 10 to 40 carbon atoms, and more preferably a linear unsubstituted alkyl group having 10 to 40 carbon atoms.

Examples of the other monomer (a4) that has an ethylenically unsaturated bond and functions as a silane coupling agent include vinyltrimethoxysilane, γ-methacryloxypropyltrimethoxysilane, vinyltriethoxysilane, and γ-methacryloxypropyltriethoxysilane.

### [Content of each structural unit in copolymer (P)]

The content of each structural unit in the copolymer (P) contained in the binder composition of this embodiment is considered to be the same as the content of each monomer in the total amount of the monomer components used in the production of the copolymer (P).

### (Content of first structural unit in all structural units)

The content of the first structural unit in all structural units of the copolymer (P) (in other words, the content of the monomer (a1) in the total amount of the monomer components used in the production of the copolymer (P)) is preferably 60% by mass or more, more preferably 70% by mass or more, even more preferably 75% by mass or more, and particularly preferably 80% by mass or more. This is because better polymerization stability can be obtained when producing the copolymer (P). The content of the first structural unit in all structural units is preferably 97% by mass or less, more preferably 95% by mass or less, and even more preferably 94% by mass or less. This is because the binder composition can form an electrode 20 with good binding properties between the electrode active materials 22 and between the electrode active material 22 and the current collector 23.

Regarding the composition of the monomer (a1), it is preferable to appropriately adjust the type and amount of the compound in order to adjust the glass transition point of the copolymer (P) or to adjust the polymerization rate according to the molecular design.

Specifically, when the monomer (a1) contains an aromatic compound having an ethylenically unsaturated bond, the content of the structural unit derived from the aromatic compound having an ethylenically unsaturated bond in all structural units is preferably 36% by mass or more, more preferably 41% by mass or more, and even more preferably 43% by mass or more, because when a binder composition in which the copolymer (P) is dispersed in an aqueous medium is produced, the copolymer (P) has excellent dispersibility.

### (Content of second structural unit in all structural units)

The content of the second structural unit in the total structural units of the copolymer (P) (in other words, the content of the monomer (a2) in the total amount of the monomer components used in the production of the copolymer (P)) is preferably 0.10% by mass or more, more preferably 1.0% by mass or more, even more preferably 3.0% by mass or more, and particularly preferably 4.0% by mass or more. This is because the binder composition can form an electrode 20 with better binding properties between the electrode active materials 22 and between the electrode active material 22 and the current collector 23. The content of the second structural unit in the total structural units is preferably 20% by mass or less, more preferably 15% by mass or less, and even more preferably 10% by mass or less. This is because better polymerization stability can be obtained when producing the copolymer (P).

### (Content of third structural units in all structural units)

When the copolymer (P) contained in the binder composition of this embodiment contains a third structural unit, the content of the third structural unit in the total structural units of the copolymer (P) (in other words, the content of the monomer (a3) in the total amount of the monomer components used in the production of the copolymer (P)) is preferably 0.010% by mass or more, more preferably 0.020% by mass or more, and more preferably 0.030% by mass or more. This is because the effect of the monomer (a3) as an internal crosslinking agent is significantly obtained, deterioration of the copolymer (P) is suppressed, and the copolymer (P) can be used as a material for a binder composition that can obtain a non-aqueous secondary battery with better cycle characteristics. The content of the third structural unit in the total structural units of the copolymer (P) is preferably 10% by mass or less, more preferably 5.0% by mass or less, even more preferably 1.0% by mass or less, and particularly preferably 0.1% by mass or less. This is because gelation of the copolymer (P) can be suppressed.

### (Content of Fourth Structural Unit in All Structural Units)

When the copolymer (P) contained in the binder composition of this embodiment contains a fourth structural unit derived from another monomer (a4), and the other monomer (a4) is a compound having only one ethylenically unsaturated bond and having a sulfo group, the content of the fourth structural unit in the total structural units of the copolymer (P) (in other words, the content of the monomer (a4) in the total amount of the monomer components used in the production of the copolymer (P)) is preferably 0.10 mass% or more, more preferably 0.20 mass% or more, and even more preferably 0.30 mass% or more. This is because good polymerization stability can be obtained when producing the copolymer (P). The content of the fourth structural unit in the total structural units of the copolymer (P) is preferably 5.0 mass% or less, more preferably 3.0 mass% or less, and even more preferably 1.0 mass% or less. This is because the particle size, viscosity, etc. of the copolymer (P) can be appropriately adjusted.

When the copolymer (P) of this embodiment contains a fourth structural unit derived from another monomer (a4), and the other monomer (a4) is a polymerizable surfactant, the content of the fourth structural unit in the total structural units of the copolymer (P) (in other words, the content of the monomer (a4) in the total amount of the monomer components used in the production of the copolymer (P)) is preferably 0.01% by mass or more, more preferably 0.05% by mass or more, and even more preferably 0.08% by mass or more. This is because the effect of including the polymerizable surfactant becomes significant, and good polymerization stability can be obtained when producing the copolymer (P). The content of the fourth structural unit in the total structural units of the copolymer (P) is preferably 5.0% by mass or less, more preferably 3.0% by mass or less, even more preferably 1.0% by mass or less, and particularly preferably 0.5% by mass. This is because the particle size, viscosity, etc. of the copolymer (P) can be appropriately adjusted.

### [Glass transition temperature (Tg) of copolymer (P)]

The glass transition temperature (Tg) of the copolymer (P) contained in the binder composition of the present embodiment is the peak top temperature of a differential scanning calorimetry (DDSC) chart obtained as the temperature derivative of DSC measured using a DSC device (EXSTAR DSC/SS7020 manufactured by Hitachi High-Tech Science Corporation) at a heating rate of 10° C./min under a nitrogen gas atmosphere.

The glass transition temperature (Tg) of the copolymer (P) is preferably -30°C or higher, and more preferably -10°C or higher, because a non-aqueous secondary battery including an electrode 20 produced using a binder composition containing the copolymer (P) has excellent cycle characteristics.

The glass transition temperature (Tg) of the copolymer (P) is preferably 100°C or lower, more preferably 50°C or lower, and even more preferably 40°C or lower. This is because the film-forming property of the binder composition is improved, and a non-aqueous secondary battery including an electrode 20 produced using the binder composition has better cycle characteristics.

### [Average particle size d50 of emulsion particles containing copolymer (P)]

When the binder composition of the present embodiment contains an aqueous medium described later, the copolymer (P) contained in the binder composition is preferably in the form of emulsion particles (dispersed particles) containing the copolymer (P). The average particle diameter d50 of the emulsion particles containing the copolymer (P) contained in the binder composition of the present embodiment is preferably 0.18 µm or more, more preferably 0.20 µm or more. When the average particle diameter d50 is 0.18 µm or more, the electrode 20 can be formed in which the electrode active material layer 24 is even less likely to peel off from the current collector 23.

The average particle diameter d50 of the emulsion particles containing the copolymer (P) is preferably 1.0 µm or less, more preferably 0.80 µm or less, even more preferably 0.60 µm or less, and particularly preferably 0.50 µm or less. When the average particle diameter d50 of the emulsion particles containing the copolymer (P) is 1.0 µm or less, when the electrode sheet in which the electrode active material layer 24 is formed on the current collector 23 is pressed to manufacture the electrode 20 using the binder composition, pressing can be performed under suitable pressing conditions. As a result, the electrode active material layer 24 can be more firmly bound to the current collector 23.

The average particle diameter d50 of the emulsion particles containing the copolymer (P) can be adjusted by a known method. For example, it can be adjusted by the amount of surfactant added when the copolymer (P) is produced by emulsion polymerization, the selection of raw material monomers, etc. According to the emulsion polymerization method, the binder composition containing the emulsion particles containing the copolymer (P) can be easily produced.

### [Method for producing copolymer (P)]

The copolymer (P) contained in the binder composition of the present embodiment can be produced, for example, by the method shown below.

It can be produced by copolymerizing raw material monomers including monomer (a1) and monomer (a2), and, if necessary, monomer (a3) consisting of a compound having a plurality of independent ethylenically unsaturated bonds, and/or other monomer (a4) (polymerization step). Hereinafter, the monomers (components (a1) to (a4)) used to synthesize copolymer (P) may be collectively referred to as raw material monomer (a).

An example of a method for copolymerizing the raw material monomer (a) is an emulsion polymerization method in which the raw material monomer (a) is emulsion-polymerized in an aqueous medium (b). When the copolymer (P) is produced by the emulsion polymerization method , in addition to the raw material monomer (a) and the aqueous medium (b), components such as a non-polymerizable surfactant (c), a basic substance (d), a radical polymerization initiator (e), and a chain transfer agent (f) can be used.

### [Aqueous medium (b)]

The aqueous medium (b) is one selected from the group consisting of water, a hydrophilic solvent, and a mixture containing water and a hydrophilic solvent. Examples of the hydrophilic solvent include methanol, ethanol, isopropyl alcohol, and N-methylpyrrolidone. From the viewpoint of polymerization stability, the aqueous medium (b) is preferably water. As the aqueous medium (b), a mixture of water and a hydrophilic solvent may be used as long as the polymerization stability is not impaired.

### [Non-polymerizable surfactant (c)]

When the copolymer (P) is produced by emulsion polymerization, a solution containing an aqueous medium (b) and a raw material monomer (a) may contain a non-polymerizable surfactant (c) for emulsion polymerization. The non-polymerizable surfactant (c) is a surfactant (c) that does not have a polymerizable unsaturated bond in its chemical structure. The surfactant (c) improves the dispersion stability of the solution during emulsion polymerization and/or the dispersion (emulsion) obtained after polymerization. As the surfactant (c), it is preferable to use an anionic surfactant or a nonionic surfactant.

Examples of the anionic surfactant include alkylbenzenesulfonates, alkyl sulfates, polyoxyethylene alkyl ether sulfates, and fatty acid salts.

Examples of the nonionic surfactant include polyoxyethylene alkyl ethers, polyoxyethylene alkyl phenyl ethers, polyoxyethylene polycyclic phenyl ethers, polyoxyalkylene alkyl ethers, sorbitan fatty acid esters, and polyoxyethylene sorbitan fatty acid esters.

The above surfactants (c) may be used alone or in combination of two or more.

### [Basic substance (d)]

When the copolymer (P) is produced by emulsion polymerization, a basic substance (d) may be added to the solution to be emulsion-polymerized containing the aqueous medium (b) and the raw material monomer (a) and/or the dispersion after emulsion polymerization. By adding the basic substance (d), the acidic components contained in the raw material monomer (a) are neutralized. As a result, the pH of the solution during emulsion polymerization and/or the dispersion after emulsion polymerization is in an appropriate range, and the stability of the solution during emulsion polymerization and/or the dispersion after emulsion polymerization is improved.

Examples of the basic substance (d) to be added to the solution to be emulsion polymerized and/or the dispersion liquid after emulsion polymerization include ammonia, triethylamine, sodium hydroxide, lithium hydroxide, etc. These basic substances (d) may be used alone or in combination of two or more.

### [Radical Polymerization Initiator (e)]

The radical polymerization initiator (e) used in producing the copolymer (P) by emulsion polymerization is not particularly limited, and known initiators can be used. Examples of the radical polymerization initiator (e) include persulfates such as ammonium persulfate and potassium persulfate, hydrogen peroxide, azo compounds, and organic peroxides such as tert-butyl hydroperoxide, tert-butyl peroxybenzoate, and cumene hydroperoxide.

In the present embodiment, when the copolymer (P) is produced by emulsion polymerization, redox polymerization may be carried out by using a reducing agent such as sodium bisulfite, Rongalite, or ascorbic acid together with the radical polymerization initiator (e).

The amount of radical polymerization initiator (e) added (including the reducing agent when used in combination) is preferably 0.001 parts by mass or more, more preferably 0.002 parts by mass or more, relative to 100 parts by mass of raw material monomer (a). This is because the conversion rate of raw material monomer (a) to copolymer (P) can be increased when the copolymer (P) is produced by emulsion polymerization. The amount of radical polymerization initiator (e) added is preferably 10 parts by mass or less, more preferably 5 parts by mass or less, relative to 100 parts by mass of raw material monomer (a). This is because the molecular weight of copolymer (P) can be increased, and the swelling rate of the electrode 20 produced using the binder composition of this embodiment with respect to the electrolyte can be reduced.

[Chain transfer agent (f)] The chain transfer agent (f) used in producing the copolymer (P) by emulsion polymerization is used to adjust the molecular weight of the copolymer (P) obtained by emulsion polymerization. Examples of the chain transfer agent (f) include n-dodecyl mercaptan, tert-dodecyl mercaptan, n-butyl mercaptan, 2-ethylhexyl thioglycolate, 2-mercaptoethanol, β-mercaptopropionic acid, methyl alcohol, n-propyl alcohol, isopropyl alcohol, t-butyl alcohol, and benzyl alcohol.

### [Emulsion Polymerization Method]

Examples of the emulsion polymerization method used in producing the copolymer (P) include a method of emulsion polymerization while continuously feeding each component used in the emulsion polymerization into a reaction vessel. The temperature of the emulsion polymerization is not particularly limited, but is, for example, 30 to 90°C, preferably 50 to 85°C, and more preferably 55 to 80°C. It is preferable to carry out the emulsion polymerization with stirring. It is also preferable to continuously feed the raw material monomer (a) and the radical polymerization initiator (e) to the solution during emulsion polymerization so that the concentrations of the raw material monomer (a) and the radical polymerization initiator (e) in the solution during emulsion polymerization are uniform.

### (Polyrotaxane)

As shown in Figure 2, the polyrotaxane 2 contained in the binder composition of the present embodiment includes a cyclic molecule 51 having a cyclic skeleton and a chain molecule 53 penetrating an opening 55 of the cyclic molecule 51. The chain molecule 53 has a stopper group 52 at both ends. The polyrotaxane 2 may contain an ethylenically unsaturated bond or may not contain an ethylenically unsaturated bond. In other words, the polyrotaxane 2 may be polymerizable or may not be polymerizable. The polyrotaxane 2 may be used alone or in combination of two or more types. Even if the polyrotaxane 2 contains an ethylenically unsaturated bond, the polyrotaxanes 2 do not polymerize with each other in the binder composition to form a polymer.

When the binder composition of the present embodiment is prepared by dispersing the copolymer (P) and the polyrotaxane 2 in the aqueous medium (B) described below, it can be produced more easily than, for example, a binder composition containing particles having structural units derived from polyrotaxane in the copolymer, or particles in which polyrotaxane is copolymerized with a raw material monomer, and an aqueous medium, and since there is a high degree of freedom in the content of polyrotaxane 2 in the binder composition, the content of polyrotaxane 2 can be appropriately changed depending on the application, etc.

As shown in Figure 2, the cyclic molecule 51 of the polyrotaxane 2 has an opening 55 through which the chain molecule 53 can pass. The cyclic molecule 51 can move along the chain molecule 53 while being passed through by the chain molecule 53. The number of cyclic molecules 51 of one molecule of the polyrotaxane 2 is not particularly limited, and may be, for example, 1 to 500, 5 to 300, or 10 to 200. When the number of the cyclic molecules 51 is plural, the cyclic molecules 51 of the polyrotaxane 2 may be only one type, or may be two or more types. A modifying group 54 may be bonded to the cyclic skeleton of the cyclic molecule 51 as shown in Figure 2. The modifying group 54 may be bonded to all the cyclic molecules 51 as shown in Figure 2, or may be bonded to only some of the cyclic molecules 51.

At least one of the cyclic skeletons of the cyclic molecule 51 is preferably a crown ether skeleton, a cyclic siloxane skeleton, or a cyclic oligosaccharide skeleton. Among these, the cyclic skeleton is more preferably a cyclic oligosaccharide skeleton. This is because the modifying group 54 can be easily introduced into the cyclic skeleton by a method of reacting a hydroxy group of the cyclic skeleton with a specific compound having an epoxy group, etc. Among the cyclic oligosaccharide skeletons, the α-cyclodextrin skeleton is particularly preferable because the modifying group 54 can be more easily introduced into the cyclic skeleton.

Examples of the modifying group 54 bonded to the cyclic skeleton of the cyclic molecule 51 include various organic groups. Examples of the organic group include a hydrocarbon group having one or more carbon atoms and which may have one or more substituents. Specific examples of the organic group include an acetyl group, a butyl ester group, a hexyl ester group, an octadecyl ester group, a hydroxyl group, an amino group, an amide group, a carboxyl group, and a mercapto group.

When the polyrotaxane 2 has an ethylenically unsaturated bond, it is preferable that the polyrotaxane 2 has a group containing an ethylenically unsaturated bond as the modifying group 54 bonded to the cyclic skeleton of the cyclic molecule 51. At least one of the groups containing an ethylenically unsaturated bond is preferably a (meth)acryloyl group, a vinyl group, an allyl group, or a propenyl group, and is more preferably a (meth)acryloyl group, and more preferably an acryloyl group, since this results in a binder composition capable of forming an electrode 20 with better binding properties between the electrode active materials 22 and between the electrode active material 22 and the current collector 23.

The group containing an ethylenically unsaturated bond bonded to the cyclic skeleton may be bonded directly to the cyclic skeleton, or the group containing an ethylenically unsaturated bond bonded to the cyclic skeleton may be bonded to the cyclic skeleton via any linking group.

The polyrotaxane 2 may have no ethylenically unsaturated bond.

The chain molecule 53 of the polyrotaxane 2 may be a straight chain or a branched chain.

The chain molecule 53 is preferably at least one selected from, for example, polyethylene glycol, polypropylene glycol, polyisoprene, polyisobutylene, polybutadiene, polytetrahydrofuran, polyacrylic acid ester, polydimethylsiloxane, polyethylene, polypropylene, and polycaprolactone, and is more preferably polyethylene glycol because the chain molecule 53 has good function of encapsulating the cyclic molecule 51 of the polyrotaxane 2.

The weight average molecular weight of the chain molecule 53 is preferably 5,000 to 50,000, and more preferably 7,500 to 40,000. When the weight average molecular weight of the chain molecule 53 is 5,000 or more, the length of the chain molecule 53 can be sufficiently secured. Therefore, in the binder composition, the distance over which the cyclic molecule 51 can move relative to the chain molecule 53 becomes sufficiently long. As a result, the binder composition has better compliance with the expansion and contraction of the electrode active material 22. When the weight average molecular weight of the chain molecule 53 is 50,000 or less, the compatibility between the copolymer (P) contained in the binder composition and the polyrotaxane 2 becomes good, which is preferable.

The stopper group 52 of the polyrotaxane 2 has a function of preventing the cyclic molecule 51 from coming off the chain molecule 53 due to its bulkiness, ionicity, etc. The stopper groups 52 arranged at both ends of the chain molecule 53 may be the same or different from each other.

Examples of the stopper group 52 that prevents the cyclic molecule 51 from coming off the chain molecule 53 due to its bulkiness include groups having a ring structure. At least one of the stopper groups 52 is preferably a dinitrophenyl group, an adamantyl group, a trityl group, or a derivative group of any of these groups, and is more preferably an adamantyl group (which may be either a 1-adamantyl group or a 2-adamantyl group) in order to obtain a polyrotaxane 2 that can be easily produced. The stopper group 52 may have one or more types of substituents. Examples of the substituent that the stopper group 52 may have include an alkyl group, an alkyloxy group, a hydroxy group, a halogen group, a cyano group, a sulfonyl group, a carboxy group, an amino group, and a phenyl group .

The weight-average molecular weight of polyrotaxane 2 is preferably 100,000 to 1,000,000, and more preferably 150,000 to 900,000. When the weight-average molecular weight of polyrotaxane 2 is 100,000 or more, the elasticity of composite particle (P) becomes suitable, which is preferable. When the weight-average molecular weight of polyrotaxane 2 is 1,000,000 or less, the compatibility between the copolymer contained in composite particle (P) and polyrotaxane 2 becomes good, which is preferable.

The polyrotaxane 2 can be produced by a known method.

Commercially available products may be used as the polyrotaxane 2. Examples of commercially available polyrotaxane 2 include "Cellm (registered trademark) Super Polymer SH2400P", "Cellm (registered trademark) Super Polymer SH3400P", "Cellm (registered trademark) Super Polymer SH1300P", "Cellm (registered trademark) Super Polymer SM3403P", "Cellm (registered trademark) Super Polymer SM1313P", "Cellm (registered trademark) Super Polymer SA3403P", "Cellm (registered trademark) Super Polymer SA2403P", and "Cellm (registered trademark) Super Polymer SA1313P", all of which are commercially available from Advanced Soft Materials Co., Ltd. Examples of suitable polymers include "SeRM (registered trademark) Super Polymer SA 1313P," "SeRM (registered trademark) Super Polymer SM 3405P," "SeRM (registered trademark) Key Mixture SM 3400C," "SeRM (registered trademark) Super Polymer SA 3405P," "SeRM (registered trademark) Super Polymer SA 2405P," "SeRM (registered trademark) Key Mixture SA 3400C," "SeRM (registered trademark) Key Mixture SA 2400C," "SeRM (registered trademark) Super Polymer SA 3405P," and "SeRM (registered trademark) Super Polymer SA 2405P."

Among these commercially available polyrotaxanes 2, it is preferable to use CELME (registered trademark) Super Polymer SH2400P and/or CELME (registered trademark) Key Mixture SA2400C, since these become binder compositions capable of forming an electrode 20 with better binding properties between the electrode active materials 22 and between the electrode active material 22 and the current collector 23 .

SeRM (registered trademark) Super Polymer SH2400P has a weight-average molecular weight of 400,000. This polyrotaxane 2 contains a cyclic molecule 51 having a cyclic skeleton made of an α-cyclodextrin skeleton, and a chain molecule 53 made of polyethylene glycol with a weight-average molecular weight of 20,000 having adamantyl groups as stopper groups 52 at both ends, and does not have an ethylenically unsaturated bond.

SeRM (registered trademark) Key Mixture SA2400C has an ethylenically unsaturated bond and a weight-average molecular weight of 600,000. This polyrotaxane 2 includes a cyclic molecule 51 having a cyclic skeleton made of an α-cyclodextrin skeleton, and a chain molecule 53 made of polyethylene glycol with a weight-average molecular weight of 20,000 having adamantyl groups as stopper groups 52 at both ends, and has an acryloyl group bonded to the cyclic skeleton of the cyclic molecule 51.

### [Content of Polyrotaxane 2 in Binder Composition]

The content of polyrotaxane 2 relative to the amount of copolymer (P) in the binder composition of this embodiment is considered to be the same as the mass of polyrotaxane 2 relative to the total mass of the monomer components used in producing the copolymer (P). In this embodiment, the content of polyrotaxane 2 is shown based on 100 parts by mass of the copolymer (P) (in other words, the monomer components used in producing the copolymer (P)) contained in the binder composition of this embodiment.

When the content of polyrotaxane 2 relative to 100 parts by mass of copolymer (P) is 0.10 parts by mass or more, the effect of the binder composition containing polyrotaxane 2 becomes significant, and as a result, the binder composition is capable of forming an electrode 20 with better binding properties between the electrode active materials 22 and between the electrode active material 22 and the current collector 23, and is therefore preferable. From the above viewpoint, the content of polyrotaxane 2 is more preferably 0.20 parts by mass or more, more preferably 0.30 parts by mass or more, and particularly preferably 1.0 part by mass or more. The content of polyrotaxane 2 may also be 3.0 parts by mass or more, or 5.0 parts by mass or more.

Furthermore, if the content of polyrotaxane 2 per 100 parts by mass of copolymer (P) is 50 parts by mass or less, the content of copolymer (P) in the binder composition can be sufficiently ensured, and a non-aqueous secondary battery including an electrode 20 containing the binder composition has a lower internal resistance, which is preferable. From the above viewpoints, the content of polyrotaxane 2 is more preferably 30 parts by mass or less, even more preferably 15 parts by mass or less, and particularly preferably 10 parts by mass or less.

**In** summary, the content of polyrotaxane 2 is preferably 0.10 parts by mass or more and 50 parts by mass or less, more preferably 0.20 parts by mass or more and 30 parts by mass or less, and even more preferably 0.30 parts by mass or more and 15 parts by mass or less, relative to 100 parts by mass of the copolymer (P) contained in the binder composition of this embodiment (in other words, the monomer component used in producing the copolymer (P)).

The binder composition of the present embodiment may be, as one embodiment, a composition containing the copolymer (P), the polyrotaxane 2, and the aqueous medium (B). The binder composition may be a composition in which the copolymer (P) and the polyrotaxane 2 are each dispersed in the aqueous medium (B), that is, a dispersion.

### [Aqueous medium (B)]

The aqueous medium (B) is the same as that described above as the aqueous medium (b). The aqueous medium (B) may be the same as or different from the aqueous medium (b) used in the synthesis of the copolymer (P).

When the binder composition of the present embodiment contains emulsified particles obtained by producing the copolymer (P) using an emulsion polymerization method, the aqueous medium (B) may be the aqueous medium (b) used in the synthesis of the copolymer (P). The aqueous medium (B) may be the aqueous medium (b) used in the synthesis of the copolymer (P) to which a new aqueous medium has been added . The aqueous medium (B) may be a medium in which a part or all of the aqueous medium (b) contained in the dispersion obtained by producing the copolymer (P) by the emulsion polymerization method has been replaced with a new aqueous solvent. The new aqueous medium used in this case may have the same composition as the aqueous medium (b) used in the synthesis of the copolymer (P), or may have a different composition.

The binder composition of the present embodiment may contain known additives as appropriate within the range that does not impair the effects of the present invention.

### [Non-volatile content of binder composition]

The binder 25 contained in the electrode 20 produced using the binder composition of this embodiment is composed of components (non-volatile components) that do not volatilize and remain even when a heating step is performed in a manufacturing method for a non-aqueous secondary battery described later. Specifically, the components that make up the binder 25 are components that remain after weighing out 1 g of the binder composition, placing it on an aluminum dish with a diameter of 5 cm, placing it in a dryer, and drying it at 1 atmosphere (1013 hPa) and a temperature of 105° C. for 1 hour while circulating air in the dryer.

The non-volatile content of the binder composition of the present embodiment is preferably 20% by mass or more, more preferably 25% by mass or more, and even more preferably 30% by mass or more. This is to ensure that the amount of the active ingredient contained in the binder composition is sufficiently large. The non-volatile content of the binder composition can be adjusted by the content of the aqueous medium (B) contained in the binder composition.

The non-volatile content of the binder composition is preferably 80% by mass or less, more preferably 70% by mass or less, and even more preferably 60% by mass or less, because this suppresses an increase in the viscosity of the binder composition and makes it easier to prepare a slurry for a non-aqueous secondary battery electrode.

The total content of the copolymer (P) and the polyrotaxane 2 contained in the non-volatile matter of the binder composition of the present embodiment is preferably 80% by mass or more, more preferably 90 % by mass or more, even more preferably 95% by mass or more, and even more preferably 98% by mass or more, because the effect of the binder composition containing the copolymer (P) and the polyrotaxane 2 becomes remarkable.

### <2. Method for producing binder composition for non-aqueous secondary battery>

Next, a method for producing the binder composition of this embodiment will be described. In one embodiment, the method for producing the binder composition of this embodiment includes a synthesis step of synthesizing the above-mentioned copolymer (P) and a mixing step of mixing the obtained copolymer (P) with the above-mentioned polyrotaxane 2. In another embodiment, the method for producing the binder composition of this embodiment includes a mixing step of preparing the above-mentioned copolymer (P) and mixing the copolymer (P) with the above-mentioned polyrotaxane 2.

In the mixing step of the present embodiment, a known method can be used as a method for mixing the copolymer (P) and the polyrotaxane 2, and is not particularly limited. For example, a method for mixing the copolymer (P) and the polyrotaxane 2 can be a method using a mixing device of a stirring type, a rotating type, a shaking type, or the like.

When producing the binder composition of the present embodiment in which the copolymer (P) and the polyrotaxane 2 are each dispersed in the aqueous medium (B), for example, a method of mixing a dispersion obtained by producing the copolymer (P) by an emulsion polymerization method with the polyrotaxane 2 and the aqueous medium (B) which may be added as necessary, or a method of mixing the copolymer (P) obtained by a method other than the emulsion polymerization method, the polyrotaxane 2 and the aqueous medium (B) can be used.

When the copolymer (P) is obtained by a method other than emulsion polymerization, a known method such as a method using a surfactant can be used to disperse the copolymer (P) in the aqueous medium (B). Examples of the surfactant include the same surfactants as those exemplified as the non-polymerizable surfactant (c) that can be used when producing the copolymer (P) by emulsion polymerization.

The polyrotaxane 2 can be dispersed in the aqueous medium (B) by a known method.

Furthermore, when using polyrotaxane 2 that is difficult to disperse in aqueous medium (B), such as polyrotaxane 2 including cyclic molecules 51 in which modifying groups 54 having (meth)acryloyl groups are bonded to the cyclic skeleton, polyrotaxane 2 can be dispersed in aqueous medium (B) by using a known method such as a method using a surfactant. Examples of the surfactant include the same surfactants as those exemplified as the non-polymerizable surfactant (c) that can be used when producing copolymer (P) by emulsion polymerization.

### <3. Slurry for non-aqueous secondary battery electrodes>

Next, the non-aqueous secondary battery electrode slurry of this embodiment will be described in detail. The non-aqueous secondary battery electrode slurry contains a binder composition containing the copolymer (P), polyrotaxane 2 aqueous medium (B), and an electrode active material. The electrode active material contained in the non-aqueous secondary battery electrode slurry is preferably dispersed in an aqueous medium. The non-aqueous secondary battery electrode slurry may contain additives such as a thickener and a conductive assistant, the above-mentioned components used in the production of the binder composition, in addition to the copolymer (P), polyrotaxane 2, the electrode active material, and the aqueous medium.

### [Total Content of Copolymer (P) and Polyrotaxane 2]

The total content of the copolymer (P) and the polyrotaxane 2 contained in the slurry for a non-aqueous secondary battery electrode is preferably 0.50 parts by mass or more, and more preferably 1.0 part by mass or more, relative to 100 parts by mass of the electrode active material, in order to fully exhibit the effect of including the binder composition of the present embodiment.

The total content of the copolymer (P) and the polyrotaxane 2 contained in the slurry for a non-aqueous secondary battery electrode is preferably 5.0 parts by mass or less, more preferably 4.0 parts by mass or less, and even more preferably 3.0 parts by mass or less, relative to 100 parts by mass of the electrode active material, because this allows the content of the electrode active material contained in the slurry for a non-aqueous secondary battery electrode to be increased.

### [Electrode active material]

The electrode active material contained in the slurry for a non-aqueous secondary battery electrode is a material capable of intercalating/deintercalating ions that serve as charge carriers, such as lithium ions. The ions that serve as charge carriers are preferably alkali metal ions, more preferably lithium ions, sodium ions, or potassium ions, and even more preferably lithium ions.

When the non-aqueous secondary battery electrode produced using the slurry for non-aqueous secondary battery electrodes is a negative electrode, the electrode active material is a negative electrode active material. The negative electrode active material preferably includes at least one of a carbon material, a material containing silicon, and a material containing titanium. Examples of the carbon material used as the negative electrode active material include coke such as petroleum coke, pitch coke, and coal coke, carbonized organic polymers, and graphite such as artificial graphite and natural graphite. Examples of the silicon-containing material used as the negative electrode active material include silicon simple substance and silicon compounds such as silicon oxide. Examples of the titanium-containing material used as the negative electrode active material include lithium titanate. These materials used as the negative electrode active material may be used alone or in a mixed or composite form.

The negative electrode active material preferably contains at least one of a carbon material and a material containing silicon, and more preferably contains a carbon material, because the copolymer (P) and the polyrotaxane 2 contained in the non-aqueous secondary battery electrode slurry have a large effect of improving the binding between the negative electrode active material (electrode active material) 22 and between the negative electrode active material 22 and the current collector 23.

the non-aqueous secondary battery electrode produced using the slurry for non-aqueous secondary battery electrodes is a positive electrode, the electrode active material is a positive electrode active material. As the positive electrode active material, a material having a more noble standard electrode potential than the negative electrode active material is used. Specifically, as the positive electrode active material, lithium composite oxides containing nickel such as Ni-Co-Mn-based lithium composite oxides, Ni-Mn-Al-based lithium composite oxides, and Ni-Co-Al-based lithium composite oxides, lithium cobalt oxide (LiCoO₂), spinel-type lithium manganate (LiMn₂O₄), olivine-type lithium iron phosphate, and chalcogen compounds such as TiS₂, MnO₂, MoO₃, and V₂O₅ can be mentioned. These materials used as the positive electrode active material may be used alone or in combination of two or more kinds.

### [Aqueous medium]

The aqueous medium contained in the slurry for a non-aqueous secondary battery electrode of this embodiment is the same as that described as the aqueous medium (b). The aqueous medium may be the same as or different from the aqueous medium (b) used in the synthesis of the copolymer (P).

The aqueous medium contained in the slurry for non-aqueous secondary battery electrodes of this embodiment may be only the aqueous medium (B) contained in the binder composition. In addition, a new aqueous medium may be added to the aqueous medium (B) contained in the binder composition. In addition, a part or all of the aqueous medium (B) contained in the binder composition may be replaced with a new aqueous solvent. The slurry for non-aqueous secondary battery electrodes of this embodiment may appropriately use additives. For example, the following materials may be exemplified.

### [Thickener]

Examples of thickeners that may be included in the slurry for non-aqueous secondary battery electrodes include celluloses such as carboxymethyl cellulose (CMC), hydroxyethyl cellulose, and hydroxypropyl cellulose, ammonium salts of celluloses, alkali metal salts of celluloses, polyvinyl alcohol, polyvinylpyrrolidone, etc. The thickener preferably contains at least one of carboxymethyl cellulose, ammonium salts of carboxymethyl cellulose, and alkali metal salts of carboxymethyl cellulose. This is because the electrode active material in the slurry for non-aqueous secondary battery electrodes becomes more easily dispersed.

The content of the thickener contained in the slurry for a non-aqueous secondary battery electrode is preferably 0.50 parts by mass or more, and more preferably 0.80 parts by mass or more, relative to 100 parts by mass of the electrode active material, because this improves the binding between the electrode active materials 22 contained in the non-aqueous secondary battery electrode produced using the slurry for a non-aqueous secondary battery electrode, and between the electrode active material 22 and the current collector 23.

The content of the thickener in the non-aqueous secondary battery electrode slurry is preferably 3.0 parts by mass or less, more preferably 2.0 parts by mass or less, and even more preferably 1.5 parts by mass or less, relative to 100 parts by mass of the electrode active material, because this improves the coatability of the non-aqueous secondary battery electrode slurry.

### [Conductive assistant]

Examples of the conductive assistant that may be included in the slurry for a non-aqueous secondary battery electrode of this embodiment include carbon black and carbon fiber. Examples of carbon black include furnace black, acetylene black, Denka Black (registered trademark) (manufactured by Denka Co., Ltd.), Ketjen Black (registered trademark) (manufactured by Ketjen Black International Co., Ltd.), and the like. Examples of carbon fiber include carbon nanotubes and carbon nanofibers. A preferred example of carbon nanotubes is VGCF (registered trademark, manufactured by Showa Denko K.K.), which is a vapor grown carbon fiber.

### [Method for producing non-aqueous secondary battery electrode slurry]

As a method for producing the slurry for non-aqueous secondary battery electrodes of this embodiment, for example, a method of mixing a binder composition in which the copolymer (P) and the polyrotaxane 2 are each dispersed in an aqueous medium (B), an electrode active material, a thickener that is contained as necessary, a conductive assistant that is contained as necessary, and other components that are contained as necessary can be mentioned. The mixing order of each component, which is the raw material of the slurry for non-aqueous secondary battery electrodes, is not particularly limited and can be determined appropriately. As a method for mixing each component , a method using a mixing device such as a stirring type, a rotating type, or a shaking type can be mentioned.

### <5. Non-aqueous secondary battery electrode>

Next, the non-aqueous secondary battery electrode of this embodiment will be described in detail. The electrode 20 of this embodiment contains the non-volatile content of the binder composition of this embodiment. As shown in Figure 1, the electrode 20 of this embodiment includes a current collector 23 and an electrode active material layer 24 formed on the current collector 23. The shape of the electrode 20 of this embodiment is not particularly limited, and may be, for example, a laminate or a wound body.

The area where the electrode active material layer 24 is formed on the current collector 23 is not particularly limited, and the electrode active material layer 24 may be formed on the entire surface of the current collector 23, or the electrode active material layer 24 may be formed only on a part of the surface of the current collector 23. When the current collector 23 is in the shape of a plate, foil, or the like, the electrode active material layer 24 may be formed on both surfaces of the current collector 23, or only on one surface.

### [Current collector]

The current collector 23 is preferably a metal sheet having a thickness of 0.001 mm to 0.5 mm. Examples of metals forming the metal sheet include iron, copper, aluminum, nickel, stainless steel, etc. When the electrode 20 of the present embodiment is a negative electrode of a lithium ion secondary battery, the current collector 23 is preferably a copper foil.

### [Electrode active material layer]

The electrode active material layer 24 contains a binder 25, which is a non-volatile component of the binder composition of this embodiment, and an electrode active material 22. The electrode active material layer 24 may contain a conductive assistant, a thickener 21, and the like. The electrode active material 22, the conductive assistant, and the thickener 21 can all be the same as those exemplified as components of the slurry for a non-aqueous secondary battery electrode.

### [Method for producing non-aqueous secondary battery electrodes]

The electrode 20 of this embodiment can be manufactured, for example, by the method shown below. First, the slurry for a non-aqueous secondary battery electrode of this embodiment is applied onto a current collector 23. Then, the slurry for a non-aqueous secondary battery electrode is dried. As a result, an electrode active material layer 24 containing a binder 25, which is a non-volatile component of the binder composition of this embodiment, is formed on the current collector 23, to form an electrode sheet. Thereafter, the electrode sheet is cut to an appropriate size as necessary. By carrying out the above steps, the electrode 20 of this embodiment is obtained.

The method of applying the non-aqueous secondary battery electrode slurry onto the current collector 23 is not particularly limited, and examples thereof include a reverse roll method, a direct roll method, a doctor blade method, a knife method, an extrusion method, a curtain method, a gravure method, a bar method, a dip method, and a squeeze method. Among these application methods, in consideration of the physical properties such as the viscosity of the non-aqueous secondary battery electrode slurry and its drying property, it is preferable to use any method selected from the direct roll method, the doctor blade method, the knife method, and the extrusion method. This is because an electrode active material layer 24 having a smooth surface and a small variation in thickness can be obtained.

When the non-aqueous secondary battery electrode slurry is applied to both sides of the current collector 23, the slurry may be applied to each side sequentially or simultaneously. The non-aqueous secondary battery electrode slurry may be applied to the current collector 23 continuously or intermittently.

The amount of the non-aqueous secondary battery electrode slurry to be applied can be appropriately determined depending on the design capacity of the battery and the composition of the non-aqueous secondary battery electrode slurry, etc.

The method for drying the non-aqueous secondary battery electrode slurry applied onto the current collector 23 is not particularly limited, and for example, a method selected from hot air, reduced pressure or vacuum environment, (far) infrared rays, and low temperature air can be used alone or in combination.

The drying temperature and drying time when drying the non-aqueous secondary battery electrode slurry can be appropriately adjusted depending on the non-volatile content concentration in the non-aqueous secondary battery electrode slurry, the coating amount on the current collector 23, etc. The drying temperature is preferably 40° C. or more and 350° C. or less, and from the viewpoint of productivity, more preferably 60°C or more and 100°C or less. The drying time is preferably 1 minute or more and 30 minutes or less.

The electrode sheet in which the electrode active material layer 24 is formed on the current collector 23 may be cut to a size and shape appropriate for the electrode 20. The method for cutting the electrode sheet is not particularly limited, and for example, slitting, laser cutting, wire cutting, a cutter, a Thomson cutter, or the like can be used.

In this embodiment, the electrode sheet may be pressed as necessary before or after cutting the electrode sheet, which allows the electrode active material 22 to be more firmly bound to the current collector 23 and reduces the thickness of the electrode 20, thereby enabling the non-aqueous secondary battery to be made smaller.

The electrode sheet can be pressed by a general method, and it is particularly preferable to use a mold pressing method or a roll pressing method.

When the die pressing method is used, the pressing pressure is not particularly limited, but is preferably 0.5 t/cm² or more and 5 t/cm² or less.

When the roll press method is used, the press load is not particularly limited, but is preferably 0.5 t/cm or more and 8 t/cm or less, because this makes it possible to suppress a decrease in the insertion and desorption capacity of charge carriers such as lithium ions in the electrode active material 22 while obtaining the above-mentioned effects of pressing.

### <6. Non-aqueous secondary battery>

Next, a lithium ion secondary battery will be described as a preferred example of the non-aqueous secondary battery according to this embodiment. Note that the configuration of the non-aqueous secondary battery of the present invention is not limited to the example shown below.

The lithium ion secondary battery of this embodiment has a positive electrode, a negative electrode, an electrolyte, and known components such as a separator that are provided as necessary, all of which are housed in an exterior body.

The shape of the lithium ion secondary battery may be any shape, such as a coin type, a button type, a sheet type, a cylindrical type, a rectangular type, or a flat type.

### [Positive and negative electrodes]

In the lithium ion secondary battery of this embodiment, one or both of the positive electrode and the negative electrode include an electrode active material layer 24 containing a binder 25 that is a non-volatile component of the binder composition of this embodiment. In the lithium ion secondary battery of this embodiment, of the positive electrode and the negative electrode, it is preferable that at least the negative electrode includes an electrode active material layer 24 that contains a binder 25 that is a non-volatile component of the binder composition.

In the lithium ion secondary battery of the present embodiment, when only one of the positive electrode and the negative electrode has an electrode active material layer 24 containing the non-volatile component of the binder composition of the present embodiment, the electrode not containing the non-volatile component of the binder composition of the present embodiment is manufactured using a known binder such as polyvinylidene fluoride instead of the binder composition of the present embodiment.

[Electrolyte] As the electrolyte, a non-aqueous liquid having ion conductivity is used. Examples of the electrolyte include a solution in which an electrolyte is dissolved in an organic solvent, an ionic liquid, etc., and the former is preferred because it is possible to obtain a lithium ion secondary battery having low manufacturing cost and low internal resistance.

As the electrolyte, an alkali metal salt can be used, and can be appropriately selected according to the type of electrode active material, etc. Examples of the electrolyte include LiClO₄, LiBF₆, LiPF₆, LiCF₃SO₃, LiCF₃CO₂, LiAsF₆, LiSbF₆, LiB₁₀Cl₁₀ , LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, and aliphatic lithium carboxylate. Other alkali metal salts can also be used as the electrolyte.

The organic solvent for dissolving the electrolyte is not particularly limited, and examples thereof include carbonate compounds such as ethylene carbonate (EC), propylene carbonate (PC), diethyl carbonate (DEC), ethyl methyl carbonate (EMC), dimethyl carbonate (DMC), fluoroethylene carbonate (FEC), and vinylene carbonate (VC), nitrile compounds such as acetonitrile, and carboxylates such as ethyl acetate, propyl acetate, methyl propionate, ethyl propionate, and propyl propionate. These organic solvents may be used alone or in combination of two or more. Among these, it is preferable to use a combination of linear carbonate solvents as the organic solvent.

### [Exterior body]

The exterior body may be made of an aluminum laminate material made of aluminum foil and a resin film, but is not limited to this.

### EXAMPLES

The present invention will be specifically described below with reference to examples and comparative examples. The examples shown below are provided to facilitate understanding of the present invention. The present invention is not limited to these examples.

In the following examples, a negative electrode of a lithium ion secondary battery was prepared as an example of a non-aqueous secondary battery electrode of the present invention, and a lithium ion secondary battery was prepared as an example of a non-aqueous secondary battery. The effects of the present invention were confirmed by comparing with a negative electrode of a lithium ion secondary battery and a lithium ion secondary battery according to comparative examples.

Moreover, the water used in the following examples and comparative examples is ion-exchanged water unless otherwise specified.

### <1. Production of binder composition for non-aqueous secondary battery>

### (Examples 1 to 5)

By mixing and emulsifying raw material monomers (a) shown in Tables 1 and 2 with 200 parts by mass of water as an aqueous medium (b) in the mass ratios shown in Tables 1 and 2. Next, aqueous solutions were prepared by dissolving radical polymerization initiators (e) shown in Tables 1 and 2 in the amounts shown in Tables 1 and 2 in 50 parts by mass of water.

In a separable flask equipped with a cooling tube, a thermometer, a stirrer, and a dropping funnel, 150 parts by mass of water was placed and heated to 75°C The monomer emulsion and the aqueous solution in which the radical polymerization initiator (e) was dissolved were each continuously fed into the separable flask over a period of 3 hours at 75°C with stirring to carry out emulsion polymerization, thereby obtaining an emulsion.

The obtained emulsion was cooled to room temperature. Then, 133 parts by mass of water and 25% by mass of ammonia water (17 parts by mass of ammonia, 51 parts by mass of water) in the amounts shown in Tables 1 and 2 were added to the emulsion. As a result, emulsions in which emulsified particles containing the copolymers (P) of Examples 1 to 5 were dispersed in water were obtained.

The emulsions in which emulsified particles containing the copolymers (P) of Examples 1 to 5 were dispersed in water and the polyrotaxanes shown in Tables 1 and 2 were mixed using a homodisper in the mass ratios shown in Tables 1 and 2 to produce the non-aqueous secondary battery binder compositions of Examples 1 to 5 containing the copolymers (P), the polyrotaxane, and water.

In the non-aqueous secondary battery binder compositions of Examples 1 to 5, no dispersion abnormality such as aggregation of the emulsion particles containing the copolymer (P) and the polyrotaxane in the composition was observed, and the dispersion was maintained.

### (Comparative Example 1)

An emulsion in which only emulsified particles containing the copolymer (P) produced in Example 1 were dispersed in water was used as a non-aqueous secondary battery binder composition of Comparative Example 1.

**[Table 1]**

| | Ingredients | | Compound name | Example 1 | | Example 2 | | Example 3 | |
|---|---|---|---|---|---|---|---|---|---|
| | | | | | *1 | | *1 | | *1 |
| Amount of ingredients used to prepare binder composition (parts by mass) | Raw material simple substance amount (a) | | Styrene | 188 | 48.6% | 188 | 48.6% | 188 | 48.6% |
| | | | 2-Lithylhexyl acrylate | 164 | 43.4% | 164 | 42.4% | 164 | 42.4% |
| | | Monomer (a1) | 2-Hydroxyethyl methacrylate | 7.5 | 1.9% | 7.5 | 1.9% | 7.5 | 1.9% |
| | | Monomer (a2) | Acrylic acid | 15 | 3.9% | 15 | 3.9% | 15 | 3.9% |
| | | | Itaconic acid | 8.0 | 2.1% | 8.0 | 2.1% | 8.0 | 2.1% |
| | | Monomer (a3) | Divinylbenzene | 0.2 | 0.05% | 0.2 | 0.05% | | |
| | | Monomer (a4) | Sodium p-styrenesulfonate | 2.5 | 0.65% | 2.5 | 0.65% | 2.5 | 0.65% |
| | | | Polyoxyethylene alkyl ether sulfate | 1.7 | 0.43% | 1.7 | 0.43% | 1.7 | 0.43% |
| | Radical initiator (e) | | Potassium persulfate | 1.0 | | 1.0 | | 1.0 | |
| | | | Rongalit SFS | 0.6 | | 0.6 | | 0.6 | |
| | Basic substance (d) | | Ammonia | 17 | | 17 | | 17 | |
| | Aqueous medium (b) | | Water | 583 | | 583 | | 583 | |
| | Polyrotaxane | | SI12400P | 7.0 | 1.81 | | | | |
| | | | SA2400C | | | 7.0 | 1.81 | 7.0 | 1.81 |
| Evaluation | Binder composition | | Non-volatile content (mass%) | 40 | | 40 | | 40 | |
| | Copolymer | | Glass transition temperature (°C) | 15 | | 15 | | 15 | |
| | | | Particle size (d50) (µm) | 0.27 | | 0.27 | | 0.27 | |
| | Battery | | Internal resistance (DCR) (Ω) | 25 | | 25 | | 27 | |
| | | | Discharge retention rate after 500 cycles (%) | 81 | | 81 | | 80 | |

| | | | | | | | | | |
|---|---|---|---|---|---|---|---|---|---|
| *1 The numbers in the right column for the amount of raw material units (a) are the content (mass%) of each unit when the total amount of raw material units (a) is 100 mass parts. | | | | | | | | | |

The numbers in the right column for polyrotaxane are the mass parts of polyrotaxane when the total amount of raw material units (a) is 100 mass parts.

**[Table 2]**

| | Ingredients | | Compound name | Example 4 | | Example 5 | | Comparative Example 1 | |
|---|---|---|---|---|---|---|---|---|---|
| | | | | | *1 | | *1 | | *1 |
| Amount of ingredients used to prepare binder composition (parts by mass) | Raw material simple substance amount (a) | | Styrene | 188 | 48.6% | 188 | 48.6% | 188 | 48.6% |
| | | | 2-Ethylhexyl acrylate | 164 | 42.4% | 164 | 42.4% | 164 | 42.4% |
| | | Monomer (a1) | 2-Hydroxyethyl methacrylate | 7.5 | 1.9% | 7.5 | 1.9% | 7.5 | 1.9% |
| | | Monomer (a2) | Acrylic acid | 15 | 3.9% | 15 | 3.9% | 15 | 3.9% |
| | | | Itaconic acid | 8.0 | 2.1% | 8.0 | 2.1% | 8.0 | 2.1% |
| | | Monomer (a3) | Divinylbenzene | 0.2 | 0.05% | 0.2 | 0.05% | 0.2 | 0.05% |
| | | Monomer (a4) | Sodium p-styrenesulfonate | 2.5 | 0.65% | 2.5 | 0.65% | 2.5 | 0.65% |
| | | | Polyoxyethylene alkyl ether sulfate | 1.7 | 0.43% | 1.7 | 0.43% | 1.7 | 0.43% |
| | Radical initiator (e) | | Potassium persulfate | 1.0 | | 1.0 | | 1.0 | |
| | | | Rongalit SFS | 0.6 | | 0.6 | | 0.6 | |
| | Basic substance (d) | | Ammonia | 17 | | 17 | | 17 | |
| | Aqueous medium (b) | | Water | 583 | | 583 | | 583 | |
| | Polyrotaxane | | SH2400P | 15.0 | 3.88 | 25.0 | 6.46 | | |
| | | | SA2400C | | | | | | |
| Evaluation | Binder composition | | Non-volatile content (mass%) | 40 | | 40 | | 40 | |
| | Copolymer | | Glass transition temperature (°C) | 15 | | 15 | | 15 | |
| | | | Particle size (d50) (µm) | 0.27 | | 0.27 | | 0.23 | |
| | Battery | | Internal resistance (DCR) (Ω) | 25 | | 25 | | 25 | |
| | | | Discharge retention rate after 500 cycles (%) | 82 | | 83 | | 75 | |

| | | | | | | | | | |
|---|---|---|---|---|---|---|---|---|---|
| *1 The numbers in the right column for the amount of raw material units (a) are the content (mass%) of each unit when the total amount of raw material units (a) is 100 mass parts. | | | | | | | | | |

The numbers in the right column for polyrotaxane are the mass parts of polyrotaxane when the total amount of raw material units (a) is 100 mass parts.

The polyoxyethylene alkyl ether sulfate salt of monomer (a4) shown in Tables 1 and 2 (Aqualon KH-10, manufactured by Dai-ichi Kogyo Seiyaku Co., Ltd.) is a polymerizable surfactant.

Rongalite SFS in the polymerization initiator (e) is a trade name of Rongalite manufactured by Sumitomo Seika Chemicals Co., Ltd.

The polyrotaxane SH2400P shown in Tables 1 and 2 is CELME (registered trademark) Super Polymer SH2400P (manufactured by Advanced Soft Materials Co., Ltd.).

The polyrotaxane SA2400C shown in Tables 1 and 2 is Selm (registered trademark) Key Mixture SA2400C (manufactured by Advanced Softmaterials Co., Ltd.).

The amount of ammonia as the basic substance (d) shown in Tables 1 and 2 is the amount (parts by mass) of ammonia contained in the ammonia water.

The amount of water as the aqueous medium (b) shown in Tables 1 and 2 is the total amount (parts by mass) of water contained in the non-aqueous secondary battery binder composition.

### <2. Evaluation of Copolymer (P) and Binder Composition for Non-aqueous Secondary Battery>

The glass transition temperature (Tg) and particle size (d50) of each of the copolymers (P) in the emulsions in which emulsion particles containing the copolymers (P) of Examples 1 to 5 and Comparative Example 1 were dispersed in water were measured by the following method. The results are shown in Tables 1 and 2.

In addition, the non-volatile content of each of the non-aqueous secondary battery binder compositions of Examples 1 to 5 and Comparative Example 1 was measured by the method described below. The results are shown in Tables 1 and 2.

### [Glass transition temperature (Tg) of copolymer (P)]

An emulsion in which emulsified particles containing copolymer (P) were dispersed in water was applied onto a release PET (polyethylene terephthalate) film and dried at 50°C for 5 hours to obtain a film of copolymer (P) having a thickness of 2 mm. A square test piece measuring 2 mm in length and 2 mm in width was cut out from the obtained film. The test piece was sealed in an aluminum pan, and a differential scanning calorimeter (EXSTAR DSC/SS7020 manufactured by Hitachi High-Tech Science Corporation) was used to perform differential scanning calorimetry (DSC) measurement of the test piece under a nitrogen gas atmosphere at a heating rate of 10°C/min. The temperature range of the DSC measurement was -40°C to 200°C. The peak top temperature of the DDSC chart obtained as the temperature derivative of the DSC was then measured, and this temperature was taken as the glass transition temperature Tg (°C) of the copolymer (P).

### [Particle size (d50) of emulsion particles containing copolymer (P)]

An emulsion in which emulsion particles containing copolymer (P) are dispersed in water was measured by dynamic light scattering (DLS) at room temperature using NANOTORAC WAVE II (manufactured by Microtrack Bell Co., Ltd.) to measure the particle size (d50) of the emulsion particles containing copolymer (P) on a volume basis using the particle refractive index.

### [Non-volatile content of binder composition for non-aqueous secondary battery]

One gram of the binder composition for non-aqueous secondary batteries containing copolymer (P), polyrotaxane and water was weighed, placed on an aluminum dish with a diameter of 5 cm, and placed in a dryer. The composition was dried for 1 hour at 1 atmosphere (1013 hPa) and a temperature of 105° C. while circulating air in the dryer, and the mass of the remaining components was measured. The mass ratio (mass%) of the above components remaining after drying relative to the mass (1 g) of the binder composition for non-aqueous secondary batteries before drying was calculated, and this was taken as the non-volatile content concentration (mass%).

### <3. Production of non-aqueous secondary battery>

Using each of the binder compositions for non-aqueous secondary batteries of Examples 1 to 5 and Comparative Example 1, a negative electrode was produced by the method described below, and the negative electrode was used to produce lithium ion secondary batteries, which are the non-aqueous secondary batteries of Examples 1 to 5 and Comparative Example 1.

### [Preparation of Positive Electrode]

A mixture was obtained by mixing 94 parts by mass of LiNi0.6Mn0.2Co0.202 as a positive electrode active material, 3 parts by mass of acetylene black as a conductive assistant, and 3 parts by mass of polyvinylidene fluoride as a binder. 50 parts by mass of N- methylpyrrolidone was added to the mixture _{and further mixed} to obtain a ₚₒₛᵢₜᵢᵥₑ electrode slurry.

An aluminum foil having a thickness of 15 µm was prepared as a positive electrode current collector. The positive electrode slurry was applied to both sides of the positive electrode current collector by a direct roll method. The amount of the positive electrode slurry applied to the positive electrode current collector was adjusted so that the thickness after the roll press treatment described below was 125 µm per side.

The positive electrode slurry applied to the positive electrode current collector was dried at 120°C for 5 minutes, and pressed by a roll press method using a roll press (manufactured by Thank Metals, press load 5 t/cm, roll width 7 cm) to obtain a positive electrode sheet having a positive electrode active material layer on both sides of the positive electrode current collector. The obtained positive electrode sheet was cut into a rectangle of 50 mm in length and 40 mm in width, and a conductive tab was attached to make a positive electrode.

### [Preparation of negative electrode (non-aqueous secondary battery electrode)]

96.9 parts by mass of artificial graphite (G49, manufactured by Jiangxi Zishen Technology Co., Ltd.) as a negative electrode active material, 3.6 parts by mass of any of the binder compositions for non-aqueous secondary batteries produced in Examples 1 to 5 and Comparative Example 1 (1.4 parts by mass of non-volatile content), and 60 parts by mass of a 2% by mass aqueous solution of CMC (carboxymethylcellulose-sodium salt, manufactured by Nippon Paper Chemicals Co., Ltd., Sunrose (registered trademark) MAC500LC) were mixed, and 16 parts by mass of water was further added and mixed using a planetary centrifugal mixer (ARE-310, manufactured by Thinky Corporation) to obtain a negative electrode slurry (slurry for non-aqueous secondary battery electrodes).

A copper foil having a thickness of 10 µm was prepared as a negative electrode current collector. The negative electrode slurry was applied to both sides of the negative electrode current collector by a direct roll method. The amount of the negative electrode slurry applied to the negative electrode current collector was adjusted so that the thickness of the negative electrode active material layer after the roll press treatment described below was 170 µm per side.

The negative electrode slurry applied to the negative electrode current collector was dried at 90°C for 10 minutes, and pressed by a roll press method using a roll press (manufactured by Thank Metals, press load 8t/cm, roll width 7cm). This resulted in a negative electrode sheet having a negative electrode active material layer on both sides of the negative electrode current collector. The obtained negative electrode sheet was cut into a rectangle of 52 mm length and 42 mm width, and a conductive tab was attached to make a negative electrode.

### [Preparation of non-aqueous secondary battery]

A separator (made of polyethylene, thickness 25 µm) made of a polyolefin-based porous film was interposed between the positive electrode and the negative electrode, and the positive electrode active material layer and the negative electrode active material layer were laminated so as to face each other, and the laminate was housed in an exterior body (battery pack) made of an aluminum laminate material. Then, an electrolyte was poured into the exterior body, vacuum impregnation was performed, and the battery was packed with a vacuum heat sealer to obtain a lithium ion secondary battery.

The electrolyte used was a mixture of 99 parts by mass of a solution in which LiPF6 was dissolved at a concentration of 1.0 mol/L in a mixed solvent containing ethylene carbonate (EC), ethyl methyl carbonate (EMC), and diethyl carbonate (DEC) in a volume ratio of EC:EMC:DEC = 30:50:20 , and 1 part by mass of vinylene carbonate (VC).

### <4. Evaluation of non-aqueous secondary batteries>

The internal resistance and the discharge capacity retention rate after 500 cycles were evaluated by the following methods for each of the lithium ion secondary batteries of Examples 1 to 5 and Comparative Example 1. The results are shown in Tables 1 and 2.

[Internal resistance (DCR)] The internal resistance (DCR (Ω)) of the lithium ion secondary battery was measured under the condition of 25° C. according to the procedure shown below. That is, the battery was charged at a constant current of 0.2 C from the rest potential until the voltage reached 3.6 V, and the state of charge was set to 50% of the initial capacity (SOC50%). Then, the battery was discharged for 60 seconds at current values of 0.2 C, 0.5 C, 1 C, and 2 C. The internal resistance DCR (Ω) at SOC50% was determined from the relationship between these four current values (values for 1 second) and voltage.

### [Discharge capacity retention rate after 500 cycles]

Under the condition of 45°C, with one cycle consisting of a series of operations of steps (i) to (iv) shown below . The time integral value of the current in steps (i) and (ii) was taken as the charge capacity, and the time integral value of the current in step (iv) was taken as the discharge capacity. The discharge capacity at the first cycle and the discharge capacity at the 500th cycle were then measured, and the discharge capacity retention rate after 500 cycles was calculated by the following formula. Discharge capacity retention rate (%)=100×(discharge capacity at 500th cycle/discharge capacity at 1st cycle)
(i) Charge at a current of 1 C until the voltage reaches 4.2 V (constant current (CC) charging).
(ii) Charge the battery at a voltage of 4.2 V until the current reaches 0.05 C (constant voltage (CV) charging). (iii) Leave the battery to stand for 30 minutes.
(iv) Discharge at a current of 1 C until the voltage reaches 2.75 V (constant current (CC) discharge).

### <5. Evaluation Results>

As shown in Tables 1 and 2, it was confirmed that the lithium ion secondary batteries of Examples 1 to 5 all had a higher capacity retention rate than the lithium ion secondary battery of Comparative Example 1. This is presumably because the non-volatile content of the binder composition for non-aqueous secondary batteries contained in the negative electrodes of the lithium ion secondary batteries of Examples 1 to 5 contains the copolymer (P) containing structural units derived from the monomer (a1) and monomer (a2) shown in Tables 1 and 2, and the polyrotaxane shown in Tables 1 and 2.

More specifically, in Comparative Example 1, a negative electrode was produced using a polyrotaxane-free non-aqueous secondary battery binder composition in which emulsified particles containing the same copolymer (P) as in Example 1 were dispersed in water. For this reason, it is presumed that the lithium ion secondary battery of Comparative Example 1 had insufficient binding between the electrode active materials and between the electrode active materials and the current collector, resulting in a poor capacity retention rate.

In addition, as shown in Tables 1 and 2, it was confirmed that the lithium ion secondary batteries of Examples 1 to 5 and Comparative Example 1 all had sufficiently low values for practical use in terms of internal resistance, which is a secondary effect. [Industrial Applicability] [0178] The present invention provides a binder composition for non-aqueous secondary batteries capable of forming electrodes for obtaining non-aqueous secondary batteries having excellent cycle characteristics, and a method for producing the same.

It is possible to provide a slurry for a non-aqueous secondary battery electrode, which can form an electrode that can provide a non-aqueous secondary battery having excellent cycle characteristics.

It is possible to provide a non-aqueous secondary battery electrode which can provide a non-aqueous secondary battery having excellent cycle characteristics, and a non-aqueous secondary battery having the same and having excellent cycle characteristics.

### REFERENCE SINGS LIST

[2 Polyrotaxane
20 electrode
21 Thickener
22 Electrode active material
23 Current collector
24 Electrode active material layer
25 binder
51 Cyclic molecules
52 Stopper Base
53 Chain molecules
54 Modifiers
55 Opening

## Claims

1. A binder composition for a non-aqueous secondary battery comprising a copolymer and a polyrotaxane, wherein
the copolymer comprises:
a first structural unit derived from a monomer (a1); and
a second structural unit derived from monomer (a2),
the monomer (a1) is a nonionic compound having only one ethylenically unsaturated bond,
the monomer (a2) is a compound having a carboxy group and only one ethylenically unsaturated bond,
the polyrotaxane has a cyclic molecule having a cyclic skeleton, and a chain molecule passing through an opening of the cyclic molecule and having stopper groups at both ends.

2. The binder composition for a non-aqueous secondary battery according to claim 1, wherein at least one of the cyclic skeletons in the cyclic molecules is a crown ether skeleton, a cyclic siloxane skeleton, or a cyclic oligosaccharide skeleton.

3. The binder composition for a non-aqueous secondary battery according to claim 1, wherein at least one of the cyclic skeletons in the cyclic molecule is an α-cyclodextrin skeleton.

4. The binder composition for a non-aqueous secondary battery according to claim 1, wherein at least one of the stopper groups is a dinitrophenyl group, an adamantyl group, a trityl group, or a derivative group of any of these groups.

5. The binder composition for a non-aqueous secondary battery according to claim 1 , wherein at least one of the stopper groups is an adamantyl group.

6. The binder composition for a non-aqueous secondary battery according to claim 1, wherein the chain molecule is at least one selected from the group consisting of polyethylene glycol, polypropylene glycol, polyisoprene, polyisobutylene, polybutadiene, polytetrahydrofuran, polyacrylic acid ester, polydimethylsiloxane, polyethylene, and polypropylene.

7. The binder composition for a non-aqueous secondary battery according to claim 1, wherein at least one of the chain molecules is polyethylene glycol.

8. The binder composition for a non-aqueous secondary battery according to claim 1, wherein the chain molecule has a weight average molecular weight of 5,000 to 50,000.

9. The binder composition for a non-aqueous secondary battery according to claim 1, wherein the polyrotaxane has an ethylenically unsaturated bond.

10. A binder composition for non-aqueous secondary batteries according to claim 9, wherein a group containing an ethylenically unsaturated bond is bonded to said cyclic skeleton, and at least one of the groups containing an ethylenically unsaturated bond bonded to said cyclic skeleton is a (meth)acryloyl group, vinyl group, allyl group, or propenyl group.

11. The binder composition for a non-aqueous secondary battery according to claim 10, wherein at least one of the groups containing an ethylenically unsaturated bond bonded to the cyclic skeleton is a (meth)acryloyl group.

12. The binder composition for a non-aqueous secondary battery according to claim 1, wherein the polyrotaxane has no ethylenically unsaturated bond.

13. Composition for a non-aqueous secondary battery according to claim 1, wherein a content of the polyrotaxane relative to 100 parts by mass of the copolymer is 0.10 parts by mass or more and 50 parts by mass or less.

14. The binder composition for a non-aqueous secondary battery according to claim 1, wherein a content of the second structural unit in all structural units of the copolymer is 0.10% by mass or more and 20% by mass or less.

15. The binder composition for a non-aqueous secondary battery according to claim 1, wherein the copolymer comprises a third structural unit derived from a monomer (a3), and
the monomer (a3) is a compound having a plurality of independent ethylenically unsaturated bonds.

16. The binder composition for a non-aqueous secondary battery according to claim 15, wherein a content of the third structural unit in all structural units of the copolymer is 0.010% by mass or more and 10% by mass or less.

17. The binder composition for a non-aqueous secondary battery according to claim 1, further comprising an aqueous medium.

18. The binder composition for a non-aqueous secondary battery according to claim 17, wherein emulsified particles containing the copolymer and the polyrotaxane are dispersed in the aqueous medium.

19. A slurry for a non-aqueous secondary battery electrode, comprising the binder composition for a non-aqueous secondary battery according to claim 17 and an electrode active material.

20. A non-aqueous secondary battery electrode comprising the non-volatile component of the binder composition for non-aqueous secondary batteries according to any one of claims 1 to 18.

21. A non-aqueous secondary battery comprising the non-aqueous secondary battery electrode according to claim 20.
